# EUROPEAN PATENT APPLICATION

(11) **EP 4 372 952 A1**
(43) Date of publication of application: **22.05.2024**
(21) Application number: 22208270.3
(22) Date of filing: 18.11.2022
(51) Int. Cl.: H02J 7/00, H02J 50/10, H02J 50/80, H04B 5/00

(54) **HIGH EFFICIENCY WIRELESS CHARGING**

(71) Applicant: Renesas Design Austria GmbH, 8041 Graz (AT)
(72) Inventor: Jongsma, Jakob, 8041 Graz (AT); Ellwood, Stephen, 8041 Graz (AT)
(74) Representative: Schwarz & Partner Patentanwälte GmbH

(57) **Abstract**

A system (17; 32) of a power device (18; 33) and a portable device (19; 34) for wireless charging of a battery (20) of the portable device (19; 34), which power device (18; 33) comprises a power transmitter stage and a power receiver stage connected with a power antenna (25) and which portable device (19; 34) comprises a portable transmitter stage and a portable receiver stage connected to a portable antenna (31), wherein the power transmitter stage is built to generate a magnetic field in the RFID frequency range and to modulate it with transmitter data and to transmit the modulated magnetic field with the power antenna (25) and which
portable receiver stage is built to receive an antenna signal (30) with the receiver antenna (31) exposed to the modulated magnetic field and to demodulate the transmitter data and to rectify the antenna signal to charge the battery (20) in charging cycles and which portable transmitter stage is built to use an amplitude modulation to modulate the magnetic field with portable transmitter data and which
power receiver stage is built to demodulate the portable transmitter data and which portable transmitter stage is built to transmit power adjustment data to increase or to decrease the power transmitted with the magnetic field emitted with the power antenna (25) of the power transmitter stage and needed to charge the battery (20) and which power receiver stage is built to receive the power adjustment data and to steer the power transmitter stage to transmit more or less power in the generated magnetic field, wherein, that the power device (18; 33) and the portable device (19; 34) are built to activate a charge mode and wherein the power transmitter stage and the portable transmitter stage in activated charge mode are built to add the functionality to use a frequency modulation to modulate the magnetic field to at least transmit the power adjustment data and wherein the power receiver stage and the portable receiver stage in activated charge mode are built to process a frequency demodulation of the antenna signals (30) to at least receive the power adjustment data.

## Description

### FIELD OF THE INVENTION

The present invention relates to a system of a power device and a portable device for wireless charging of a battery of the portable device, which power device comprises a power transmitter stage and a power receiver stage connected with a power antenna and which portable device comprises a portable transmitter stage and a portable receiver stage connected to a portable antenna, wherein the
power transmitter stage is built to generate a magnetic field in the RFID frequency range and to modulate it with transmitter data and to transmit the modulated magnetic field with the power antenna and which
portable receiver stage is built to receive an antenna signal with the receiver antenna exposed to the modulated magnetic field and to demodulate the transmitter data and to rectify the antenna signal to charge the battery in charging cycles and which
portable transmitter stage is built to use an amplitude modulation to modulate the magnetic field with portable transmitter data and which
power receiver stage is built to demodulate the portable transmitter data and which
portable transmitter stage is built to transmit power adjustment data to increase or to decrease the power transmitted with the magnetic field emitted with the power antenna of the power transmitter stage and needed to charge the battery and which
power receiver stage is built to receive the power adjustment data and to steer the power transmitter stage to transmit more or less power in the generated magnetic field.

### BACKGROUND OF THE INVENTION

Wireless charging is used for all kind of different portable devices like a mobile phone or earphones. The portable device just has to be dropped close-by a power device that generates and emits a magnetic field via an antenna of the power device with the advantage, that no wire is needed to charge the portable device. In some of these systems, the power device just emits the magnetic field and some newer systems comprise a feedback loop from the portable device to the power device to regulate the power of the magnetic field.

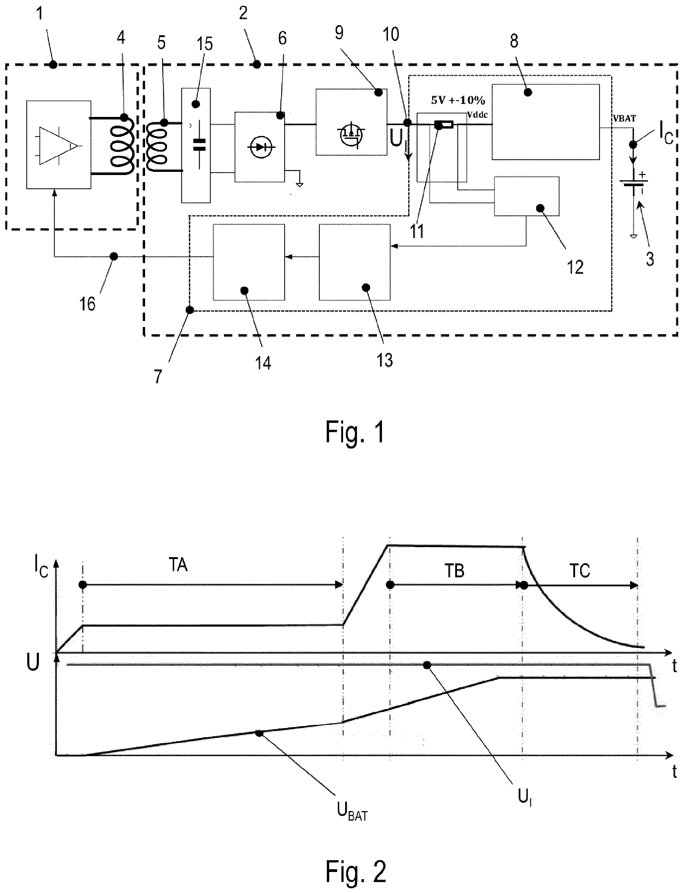

Figure 1 shows such a system of a power device 1 and a portable device 2 with a battery 3, know to a person skilled in the art. Such a system is for instance described in the NFC Forum^{™} Technical Specification Version 1.0. The power device 1 called "poller" comprises an antenna 4 that emits a magnetic field with the frequency of 13,56 MHz. The portable device 2 called "listener" comprises an antenna 5 exposed to the magnetic field emitted by the power device 1. A matching circuit 15 matches the impedance of the output pins of the antenna 5 to input pins of a rectifier 6 that uses a bridge rectifier to rectify the antenna signal and to provide a direct DC voltage. A charge stage 7 of the portable device 2 is used to charge the battery 3. As the charge stage 7 comprises a charger IC 8 that needs a power voltage of for instance 5V +/- 10% and a DC/DC converter 9 is used to convert the direct DC voltage provided by rectifier 6 to an appropriate input voltage U_{I} at an input pin 10 of charge stage 7.

Battery 3 is a Li-Ion battery that needs to be charged by charge stage 7 in different time periods with different charge currents Ic and charge voltages. To achieve that, charge stage 7 comprises a serial ohmic resistance component 11 in the path between input pin 10 and battery 3 to generate a measuring voltage, which is measured by current measurement stage 12 to measure the charge current Ic to charge the battery 3. Charge stage 7 furthermore comprises a digital control stage 13 that generates a power adjustment information 16 in case the input voltage U_{I} at input pin 10 and/or the charge current Ic to charge the battery 3 are too low or too high. Such power adjustment information 16 is provided by the digital control stage 13 to a Cless Communication stage 14, which complies to the NFC communication protocol to communicate the power adjustment information 16 to the power device 1. With this feedback loop from portable device 2 to power device 1, charge stage 7 can request more or less power in the magnetic field provided by the power device 1.

Figure 2 shows a time diagram of the charge current Ic in three different time periods TA, TB and TC to load battery 3. Figure 2 furthermore shows input voltage U_{I} at input pin 10 of charge stage 7 and the actual battery voltage U_{BAT} during the time periods TA, TB and TC to load battery 3. To actually load battery 3 only battery voltage U_{BAT} multiplied with charge current Ic is used. This wireless from the power device to the portable device transferred power is in the range of up to 1W as for instance specified by the NFC-Forum specification. This amount of energy is enough to e.g. charge the battery of earphones, but will not be enough to e.g. charge a mobile phone within a reasonable time frame.

The NFC communication protocol defines to use amplitude modulation in Wireless charging standard WLC such as Qi and NFC-WLC. A disadvantage of this prior art system is that during the "low" phase of the AM less power is being transmitted. This in turn increases the charging time and reduces the power transfer efficiency, thus adding to power loss and increasing the temperature of the devices involved. Two amplitude modulation systems are defined by the NFC forum being Type A and Type B.
- Type A is characterized by on/off keying which uses 100% modulation depth. During modulation the amplitude is zero, therefore the power transferred is also zero. Meanwhile both the power transmitting device and receiving device are powered, so energy is consumed while no power is transmitted.
- Type B is characterized by 10% modulation depth, however since power transferred is proportional to the square of the amplitude this means that the power transmitted falls to 81% of maximum during modulation. This represents a lower power loss than when using Type A modulation, but it is still significant.

### SUMMARY OF THE INVENTION

It is an object of the invention to provide a system of a power device and a portable device for wireless charging of the battery of the portable device which enables the wireless transfer of more power to enable faster charging and/or to enable to charge portable devices with larger battery capacities.

This object is achieved in a system according to claim 1.

The claimed system may use amplitude modulation, as defined by the NFC standard or any other type of modulation defined in other standards in the RFID area to comply with these conditions, but when the charge mode is activated adds the functionality to use frequency modulation to enable maximal power transfer by the magnetic field even during times the magnetic field is modulated to e.g. transfer power adjustment information. The claimed system may be realized backwards compatible with NFC charging systems, which request amplitude modulation to transfer power adjustment information, but if both, the power device and the portable device, are built to use frequency modulation during activated charge mode, more power may be transferred during less charging time. As the power transferred in a frequency modulated magnetic field does not vary as in an amplitude modulated magnetic field, the output voltage of the rectifier that rectifies the antenna signal does not vary what enables a technical simpler and less complex further processing of the rectified voltage to ensure a stable supply voltage for all stages of the portable device.

In a preferred embodiment of the invention the power transmitter stage comprises an oversampling power amplifier realized as sinusoid generating switched-capacitor amplifier. Such an amplifier is known from EP 3 182 585 B, but enables additional positive combination effects with the claimed system.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figure 1 shows a system known to a person skilled in the art, which system comprises a power device and a portable device with a battery to be charged wireless.
Figure 2 shows a time diagram of the charge current to charge the battery and an input voltage of a charge stage of the portable device of the system according to figure 1.
Figure 3 shows a system according to an embodiment of the invention, which comprises a power device and a portable device with a battery to be charged wireless.
Figure 4 shows an amplitude modulated signal and a frequency modulated signal.
Figures 5 shows a further system according to the invention, which comprises a power device and a portable device with a battery to be charged wirelessly.
Figures 6 shows a general explanation of an I/Q modulation that could be used in the system of figure 5.

### DETAILED DESCRIPTION OF EMBODIMENTS

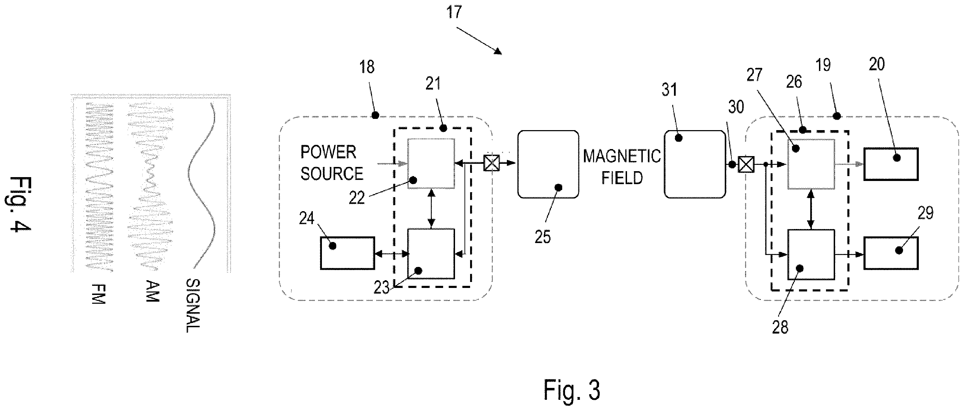

Figure 3 shows a principle implementation of a system 17 of a power device 18 and a portable device 19 for wireless charging of a battery 20. In this implementation a power transmitter and receiver stage 21 of the power device 18 is shown, which comprises a magnetic field generation stage 22 and a power data generation and extraction stage 23 connected to a processor 24 of the power device 18. The power device 18 may be realized as e.g. charging station to charge the battery of wireless earphones or a mobile phone or other portable device. Power transmitter and receiver stage 21 may be powered by mains power or a larger battery of the power device 18 as power source. Magnetic field generation stage 22 is built to generate a magnetic field in the RFID frequency range with a frequency of 13,52 MHz and to modulate it with transmitter data received from the power data generation and extraction stage 23 and to transmit the modulated magnetic field with a power antenna 25.

Portable device 19 comprises a portable transmitter and receiver stage 26, which comprises a portable power extraction and modulation stage 27 and a portable data generation and extraction stage 28 connected to a processor 29 of the portable device 19. The portable data generation and extraction stage 28 is built to receive an antenna signal 30 from a receiver antenna 31 exposed to the modulated magnetic field to demodulate the transmitter data. Portable power extraction and modulation stage 27 is built to rectify the antenna signal 30 needed to power a charge stage (not shown) to charge the battery 20 in charging cycles.

System 17 enables a data transfer from the portable device 19 to power device 18. Such data may be transmitter data like for instance to transfer a serial number of the portable device or information about the type of the portable device 19 to the power device 18. Furthermore, such transmitter data may be power adjustment data to increase or to decrease the power transmitted with the magnetic field emitted with the power antenna 25 of the power transmitter and receiver stage 21 and needed to charge the battery 20. To enable that, portable power extraction and modulation stage 27 is built to modulate the magnetic field with transmitter data or power adjustment data provided by the portable data generation and extraction stage 28. Power transmitter and receiver stage 21 is built to demodulate the transmitter data to provide the information about the portable device 19 to the power device 18 or to demodulate the power adjustment data and to steer that part of the power transmitter and receiver stage 21 that is responsible to generate the magnetic field and the power transmitted with the magnetic field. Depending on the amplitude and/or the form of the waves of the magnetic field (e.g. SIN, square, triangle,...) the power transmitter and receiver stage 21 is built to transmit more or less power in the generated magnetic field.

Prior art systems, like the system described based on figures 1 and 2, use amplitude modulation and in particular load modulation for these communications between the power device and the portable device. This is true for transmitter data in application relevant communications and for above explained communication of power adjustment data when a charge mode to charge the portable device has been activated. Such application relevant communications with transmitter data furthermore for instance could be a communication between a payment terminal (power device) and a mobile phone (portable device) for a payment application.

System 17, as a first embodiment of the invention, is furthermore enabled that the power transmitter and receiver stage 21 and the portable transmitter and receiver stage 26 in activated charge mode are built to add the functionality to use a frequency modulation to modulate the magnetic field. To demodulate such frequency modulated magnetic field the power transmitter and receiver stage 21 and the portable transmitter and receiver stage 26 in activated charge mode are built to process a frequency demodulation of the antenna signal from the power antenna 25 and the antenna signal 30 from the portable antenna 31. This enables the portable device 19 to transmit power adjustment information or other transmitter data to the power device 18 in a way that substantially does not influence and in particular not reduce the power transmitted in the magnetic field. This effect can be explained based on figure 4, where an amplitude modulated signal and a frequency modulated signal are shown. As the power transferred in these signals is related to the area under the modulated signals, each time the amplitude modulated signal transfers information in transmitter data, the amplitude of the modulated signals is reduced and the power transferred in the magnetic field is reduced as well. As the power transferred in the magnetic field is substantially not influenced by the frequency modulated communication of transmitter data between the power device 18 and the portable device 19 in activated charge mode, the charging time may be reduced compared to prior art charging systems.

In some embodiments of the invention power device 18 and portable device 19 may use frequency modulation as sole modulation method during all kind of application related communications and during activated charge mode and deactivated charge mode as well. In a preferred embodiment of the invention power transmitter and receiver stage 21 and the portable transmitter and receiver stage 26 are built to use an amplitude modulation to modulate and demodulate the magnetic field when the charge mode is deactivated for communications of all kind of different applications like payment or identification which may be based on all kind of different RFID standards like the standard ISO18.092 or NFC forum specifications. Only after activation of the charge mode, where maximal transfer of power from the power device 18 to portable device 19 is needed, frequency modulation only is used to communicate between the power device 18 and the portable device 19. In a further embodiment of the invention amplitude modulation and frequency modulation may be used at the same time in activated charge mode and/or in deactivated charge mode to enable a communication of the power device 18 and the portable device 19 in two parallel communication channels.

In a further embodiment of the invention the power device 18 may use amplitude modulation even in activated charge mode to communicate power adjustment data with those portable devices 19 that are not enabled by a portable transmitter and receiver stage 26 to communicate based on frequency modulation. This enables backward compatibility with portable devices like the portable device 2 of state of the art system shown in figure 1. Advantageously the power device 18 is in addition to the amplitude modulation enabled to communicate with frequency modulation in activated charge mode with those portable devices, like portable device 19, shown in figure 3. This enables a faster charge mode for those inventive power devices 18 and portable devices 19 that use frequency modulation during charge mode, what reduces overheads and also increases efficiency. Furthermore charging at constant power is more efficient than using variable power.

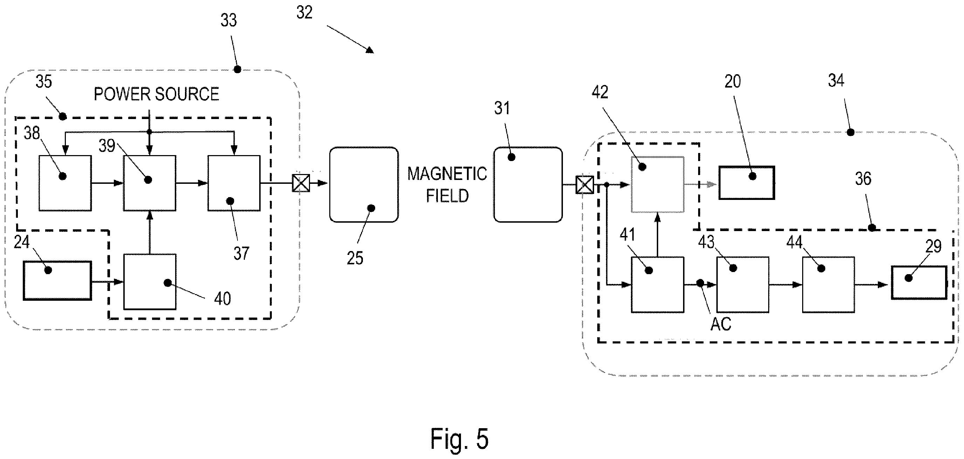

Figures 5 shows a system 32 of another embodiment of the invention, which comprises a power device 33 and a portable device 34 with a battery 20 to be charged wireless. System 32 differs from system 17 shown in figure 3 in the realization of a power transmitter stage 35 and a portable receiver stage 36, which enable only a frequency modulated communication from the power device 33 to the portable device 34. But figure 5 shows in more detail than shown in figure 3 how the power transmitter stage 35 and a portable receiver stage 36 are realized.

Power transmitter stage 35 comprises a power amplifier 37, which is an oversampling power amplifier realized as sinusoid generating switched-capacitor amplifier. Such a power amplifier 37 is known from EP 3 182 585 B. In another embodiment the power amplifier could be realized as class-C amplifier, which requires external filtering.

Power transmitter stage 35 furthermore comprises a reference oscillator 38, which consists of a crystal oscillator generating a frequency in the range of 10-60MHz as defined by the oscillating mode of the quartz crystal deployed.

Power transmitter stage 35 furthermore comprises a power transmitter PLL 39, which consists of a phase detector, loop filter, voltage-controlled oscillator and feedback divider. It translates the frequency from the reference oscillator 38 to the appropriate output frequency. In standard NFC devices with square wave output, the output frequency of the PLL is usually directly the RF output frequency of 13.56 MHz. In case of the power transmitter PLL 39 with the oversampling power amplifier 36 this frequency is in the 433 to 868 MHz range due to the oversampling power amplifier 37.

The feedback divider ratio is digitally controlled, which results in a change in output frequency thus generating the frequency shift keying modulation. The control can either be done by means of a sigma-delta modulator, which turns the power transmitter PLL 38 into a so-called fractional-N PLL, allowing for a large PLL loop bandwidth and therefore high data rate or the control can be done directly in case of integer-N PLL operation. However, the latter requires a low PLL input reference frequency and therefore low PLL bandwidth thus limiting the data rate of the frequency modulated communication.

The PLL divider control is processd by power data generation stage 40. Power data generation stage 40 furthermore utilizes data pre-processing, which adds physical NFC-protocol layers, anti-collision details, etc. It may also contain the above-mentioned sigma-delta modulator, when using a fractional-N PLL, and/or a (Gaussian) filtering stage to limit the spectral bandwidth of the FSK modulation.

Portable receiver stage 36 of portable device 34 comprises a portable receiver PLL 41, which consists of a phase detector, loop filter, voltage-controlled oscillator and a feedback divider. Its main purpose is to extract the clock from the magnetic field and to provide it to a power extraction stage 42. Since the portable receiver PLL 41 follows the frequency of the magnetic field, any frequency change, like with a frequency modulation, in the magnetic field can be observed as an alternating current signal AC provided to the input of a slicer 43.

The slicer 43 consists of
1) low-pass filter (LPF) to extract the (mean) slicing level from the output of the PLL loop filter and
2) comparator to compare the output of the loop filter with the output of the LPF

Portable receiver stage 36 furthermore comprises a data post processing stage 44 which takes the output of the slicer 43 and handles the physical NFC-protocol layers, anti-collision details, etc.

The power extraction stage 42 usually consists of passive or active rectifier, a voltage limiting stage by means of a shunt regulator, and a (battery) charger.

With the concrete realization of system 32 shown in figure 5 it is possible to use frequency shift keying as digital realization of frequency modulation to transmit transmitter data from the power device 33 to portable device 34 during an activated charge mode. The charge mode may be activated by the power device 33 and/or by the portable device 34 and may be activated for both automatically in case the portable device 34 is moved into the magnetic field of the power device 33. The appropriate stages needed to enable a frequency modulated communication from the portabel device 34 to the power device 33 may be added to system 32.

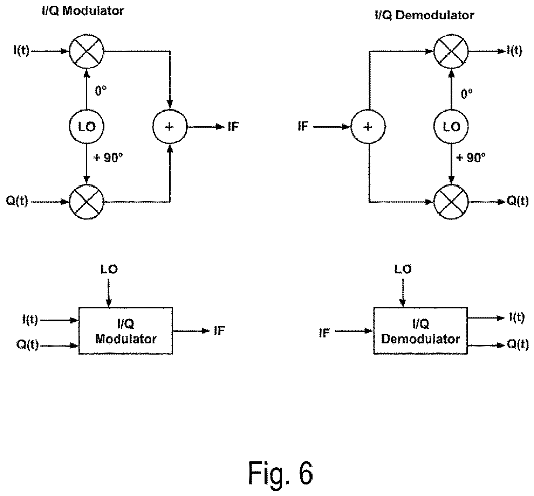

In a further alternative embodiment of the invention instead of modulating the divider ratio of the PLL as explained above, one can also use IQ-modulation where in-phase and quadrature (0 and 90 deg) RF signals generated by the power transmitter PLL 39 are mixed with two 90 degrees phase offset (I & Q) data signals followed by an addition stage before entering the power amplifier 37. The IQ modulation results in a frequency translation which can be used to generate the FSK-modulated RF signals. As shown in figure 6, the resulting signal is an IF (Intermediate Frequency), however one can also mix directly to the Radio Frequency (RF).

Instead of using the portable receiver PLL 41 for the portable device 34 it is also possible to demodulate the FSK signal by means of a quadrature demodulator. In this case the incoming signal can either be taken directly from the portable antenna 31 or from an intermediate frequency (IF) mixing stage and by means of the IQ de-modulator is translated into baseband for further processing to extract the FSK data.

In other embodiments of the invention all kind of different combinations of activated or deactivated charge mode and the use of amplitude modulation and/or frequency modulation to transmit transmitter data from and to the power device and portable device may be realized.

## Claims

1. System (17; 32) of a power device (18; 33) and a portable device (19; 34) for wireless charging of a battery (20) of the portable device (19; 34), which power device (18; 33) comprises a power transmitter stage and a power receiver stage connected with a power antenna (25) and which portable device (19; 34) comprises a portable transmitter stage and a portable receiver stage connected to a portable antenna (31), wherein the
power transmitter stage is built to generate a magnetic field in the RFID frequency range and to modulate it with transmitter data and to transmit the modulated magnetic field with the power antenna (25) and which
portable receiver stage is built to receive an antenna signal (30) with the receiver antenna (31) exposed to the modulated magnetic field and to demodulate the transmitter data and to rectify the antenna signal to charge the battery (20) in charging cycles and which
portable transmitter stage is built to use an amplitude modulation to modulate the magnetic field with portable transmitter data and which
power receiver stage is built to demodulate the portable transmitter data and which
portable transmitter stage is built to transmit power adjustment data to increase or to decrease the power transmitted with the magnetic field emitted with the power antenna (25) of the power transmitter stage and needed to charge the battery (20) and which
power receiver stage is built to receive the power adjustment data and to steer the power transmitter stage to transmit more or less power in the generated magnetic field, **characterized in,**
**that** the power device (18; 33) and the portable device (19; 34) are built to activate a charge mode and wherein the power transmitter stage and the portable transmitter stage in activated charge mode are built to add the functionality to use a frequency modulation to modulate the magnetic field to at least transmit the power adjustment data and wherein the power receiver stage and the portable receiver stage in activated charge mode are built to process a frequency demodulation of the antenna signals (30) to at least receive the power adjustment data.

2. System (17; 32) according to claim 1, wherein that the power device (18; 33) and the portable device (19; 34) are built to use both amplitude modulation and frequency modulation to transmit/receive data when the charge mode is activated and/or when the charge mode is not activated.

3. System (17; 32) according to claim 1, wherein that the power device (18; 33) and the portable device (19; 34) are built to use only frequency modulation to transmit/receive data when the charge mode is activated.

4. System (17; 32) according to any of the claims 1 to 3, wherein that the power device (18; 33) and the portable device (19; 34) are built to use Frequency Shift Keying or a IQ modulation as frequency modulation.

5. System (32) according to any of the claims 1 to 4, wherein the power transmitter stage comprises an oversampling power amplifier (37) realized as sinusoid generating switched-capacitor amplifier.

6. System (17; 32) according to any of the claims 1 to 5, wherein the wireless data interface of the power device (18; 33) and portable device (19; 34) are realized as NFC interface that complies with the standard IS018.092.

## Amended claims

### Amended claims in accordance with Rule 137(2) EPC.

1. System (17; 32) of a power device (18; 33) and a portable device (19; 34) for wireless charging of a battery (20) of the portable device (19; 34), which power device (18; 33) comprises a power transmitter stage and a power receiver stage connected with a power antenna (25) and which portable device (19; 34) comprises a portable transmitter stage and a portable receiver stage connected to a portable antenna (31), wherein the power transmitter stage is built to generate a magnetic field in the RFID frequency range and to modulate it with transmitter data and to transmit the modulated magnetic field with the power antenna (25) and which
portable receiver stage is built to receive an antenna signal (30) from the receiver antenna (31) exposed to the modulated magnetic field and to demodulate the transmitter data and to rectify the antenna signal to charge the battery (20) in charging cycles and which portable transmitter stage is built to use an amplitude modulation to modulate the magnetic field with portable transmitter data and which
power receiver stage is built to demodulate the portable transmitter data and which portable transmitter stage is built to transmit power adjustment data to increase or to decrease the power transmitted with the magnetic field emitted with the power antenna (25) of the power transmitter stage and needed to charge the battery (20) and which power receiver stage is built to receive the power adjustment data and to steer the power transmitter stage to transmit more or less power in the generated magnetic field, **characterized in,**
**that** the power device (18; 33) and the portable device (19; 34) are built to activate a charge mode and wherein the power transmitter stage in activated charge mode is built to add the functionality to use a frequency modulation to modulate the magnetic field to at least transmit the power adjustment data and wherein the portable receiver stage in activated charge mode is built to process a frequency demodulation of the antenna signals (30) to at least receive the power adjustment data.

2. System (17; 32) according to claim 1, wherein that the power device (18; 33) and the portable device (19; 34) are built to use both amplitude modulation and frequency modulation to transmit/receive data when the charge mode is activated and/or when the charge mode is not activated.

3. System (17; 32) according to claim 1, wherein that the power device (18; 33) and the portable device (19; 34) are built to use only frequency modulation to transmit/receive data when the charge mode is activated.

4. System (17; 32) according to any of the claims 1 to 3, wherein that the power device (18; 33) and the portable device (19; 34) are built to use Frequency Shift Keying or a IQ modulation as frequency modulation.

5. System (32) according to any of the claims 1 to 4, wherein the power transmitter stage comprises an oversampling power amplifier (37) realized as sinusoid generating switched-capacitor amplifier.

6. System (17; 32) according to any of the claims 1 to 5, wherein the wireless data interface of the power device (18; 33) and portable device (19; 34) are realized as NFC interface that complies with the standard ISO18.092.
